# EUROPÄISCHE PATENTSCHRIFT

(11) **EP 2 954 357 B1**
(45) Veröffentlichungstag und Bekanntmachung des Hinweises auf die Patenterteilung: **10.04.2019**
(21) Anmeldenummer: 14707636.8
(22) Anmeldetag: 10.02.2014
(51) Int. Cl.: G02B 6/42, G02B 6/38

(54) **GERÄTEBUCHSE**
EQUIPMENT SOCKET
PRISE FEMELLE POUR ÉQUIPEMENT

(30) Priorität: 08.02.2013 DE 102013101267
(43) Veröffentlichungstag der Anmeldung: 16.12.2015
(73) Patentinhaber: HARTING Electronics GmbH, 32339 Espelkamp (DE)
(72) Erfinder: BUSSMANN, Rainer, 49152 Bad Essen (DE); LINDKAMP, Marc, 32312 Lübbecke (DE)
(86) Internationale Anmeldenummer: PCT/DE2014/100047
(87) Internationale Veröffentlichungsnummer: WO 2014/121791

(56) Entgegenhaltungen:
- US-A- 5 138 680
- US-A1- 2007 036 489
- US-A1- 2007 140 621
- US-A1- 2010 261 378

## Beschreibung

Die Erfindung betrifft eine Gerätebuchse nach dem Oberbegriff des Anspruchs 1.

Derartige Gerätebuchsen werden in elektronischen Geräten eingesetzt, um diese Geräte beispielsweise mit Datensignalen zu versorgen. Die Gerätebuchse kann aber auch eingesetzt werden, um die Stromversorgung der Geräte zu gewährleisten.

### Stand der Technik

Die DE 10 2009 011 388 B3 zeigt einen Steckverbinder der optische Signale über Lichtwellenleiter überträgt, die in so genannten Ferrulen gehalten sind. Die Position der Ferrulen im Steckverbinder ist nicht genormt, so dass die Steckverbinder zumindest einen axialen Ausgleich der Ferrulen aufweisen müssen, um diese für verschiedene Buchsen steckbar zu gestalten. Oft muss zusätzlich zum axialen auch ein horizontaler Ausgleich vorgesehen sein. Ein solcher Steckverbinder.ist aufwendig herzustellen und damit teuer.

Die US 2007 003 64 89 A1 zeigt eine Gerätebuchse, bestehend aus einer Wanddurchführung, einer Leiterplatte und einem auf der Leiterplatte aufgebrachten elektronischen Bauteil.

Die US 5 138 680 A zeigt eine Gerätebuchse, bestehend aus einer Wanddurchführung, einer Leiterplatte und einem auf der Leiterplatte aufgebrachten elektronischen Bauteil. Über eine Dichtung kann die vertikale und horizontale Position des elektronischen Bauteils zur Wanddurchführung eingestellt werden.

Die US 2010 026 13 78 A zeigt eine Gerätebuchse, bestehend aus einer Wanddurchführung, einer Leiterplatte und einem auf der Leiterplatte aufgebrachten elektronischen Bauteil. Über ein Panel kann die horizontale Position des elektronischen Bauteils zur Wanddurchführung verändert werden. Hier kann eine Schrägstellung erreicht werden.

Die US 2007 014 0621 A1 zeigt eine Gerätebuchse, bestehend aus einer Wanddurchführung, einer Leiterplatte und einem auf der Leiterplatte aufgebrachten elektronischen Bauteil. Die US 2007 014 0621 A1 zeigt ein zusätzliches Bauteil mit einem Positionierungspin zur horizontalen Positionierung des elektronischen Bauteils zur Wanddurchführung.

Möchte man günstige optische Steckverbinder einsetzen, die keinen Längen- und Höhenausgleich aufweisen (so genannte Standardstecker), muss man Steckverbinder und Buchsen beziehen, die aufeinander abgestimmt sind. Dadurch macht man sich oft abhängig von einem bestimmten Hersteller.

### Aufgabenstellung

Die Aufgabe der Erfindung besteht darin, eine Gerätebuchse vorzuschlagen, die es ermöglicht nicht normierte Standardstecker zu verwenden.

Die Aufgabe wird durch die kennzeichnenden Merkmale des Gegenstands des Anspruchs 1 gelöst.

Vorteilhafte Ausgestaltungen der Erfindung sind in den Unteransprüchen angegeben.

Bislang war die Fachwelt der Meinung den Längen- und Höhenausgleich nicht normierter Steckverbinder durch die Gerätebuchse nicht lösen zu können, da die Geräte, in denen die Buchse eingebaut ist, dazu zu wenig Platz, so genannten Bauraum, zur Verfügung stellen.

Längen- und Höhenausgleichslösungen findet der Fachmann in der Literatur nur auf der Steckerseite.

Die erfindungsgemäße Gerätebuchse schafft einen Längen- und Höhenausgleich, ohne dabei mehr Bauraum zu benötigen.

Die vorgeschlagene Gerätebuchse besteht im Wesentlichen aus einer Wanddurchführung, die beispielsweise in eine dafür vorgesehene Ausnehmung einer Gerätewand angeschraubt wird.

Weiter umfasst die Gerätebuchse eine Leiterkarte auf die ein elektronisches Bauteil aufgebracht ist. Das elektronische Bauteil weist vorzugsweise eine Buchse für einen Steckverbinder auf, wobei die Steckrichtung in die Buchse im Wesentlich senkrecht zur Gerätewand ausgerichtet ist.

Die Gerätebuchse weist ein Verriegelungsmittel auf, dass die Leiterkarte mit der Wanddurchführung verbindet. Vorzugsweise ist diese Verbindung reversibel ausgestaltet. Da das elektronische Bauteil auf der Leiterkarte aufgebracht ist, ist damit auch das Bauteil mit der Gerätebuchse verbunden. Die Buchse des elektronischen Bauteils ist innerhalb der Wanddurchführung angeordnet. Über die Öffnung der Wanddurchführung kann von außen ein Steckverbinder in die Gerätebuchse eingesteckt werden.

Vorteilhafterweise sind die oben erwähnten Verriegelungsmittel an der Wanddurchführung angeformt.

Die Gerätebuchse weist erste Mittel auf, die die vertikale Position (y, z) des elektronischen Bauteils innerhalb der Wanddurchführung bestimmen.

Es sind zweite Mittel vorgesehen, die die horizontale Position (x, z) des elektronischen Bauteils zur Wanddurchführung bestimmen.

Durch die zweiten Mittel kann beispielsweise eingestellt werden, ob die Buchse in der Wanddurchführung weiter hinten oder vorne angeordnet ist. Man kann hier auch von einem Längenausgleich sprechen.

Durch die ersten Mittel kann beispielsweise eingestellt werden, ob die Buchse in der Wanddurchführung weiter oben oder unten angeordnet ist. Man kann hier auch von einem Höhenausgleich sprechen. Die seitliche Position lässt sich gleichermaßen bestimmen. Man spricht hier von einem Seitenausgleich innerhalb der Höhenausgleichsebene.

Eine derartige Gerätebuchse kann so eingestellt werden, dass diverse nicht normierte Standardstecker eingesteckt werden können. Eine solche Gerätebuchse erhöht insgesamt die Qualität des Gerätes, da der Kunde im Betrieb nicht mehr auf bestimmte Stecker achten muss. Außerdem wird eine solche Buchse nicht beschädigt, wenn versucht wird, einen nicht passenden Stecker einzustecken. Die Gerätebuchse kann schließlich an den jeweiligen Steckverbinder angepasst werden.

Erfindungsgemäß umfasst die Gerätebuchse eine Dichtung, die innerhalb der Wanddurchführung angeordnet ist, das elektronische Bauteil umschließt und dadurch die Öffnung der Wanddurchführung, gegen Medien wie beispielsweise Staub, abdichtet. Die Dichtung verfügt über die ersten Mittel mit denen die vertikale Position (y, z) des elektronischen Bauteils einstellbar ist.

Die Dichtung ist eine besonders preisgünstige Komponente der Gerätebuchse. Es ist daher leicht möglich eine relativ große Anzahl von verschiedenen Dichtungen mit verschiedener vertikaler Positionierung (y, z) des elektronischen Bauteils zu bevorraten.

Die Dichtung weist eine Öffnung auf, dessen Umrandung das elektronische Bauteil umschließt. Betrachtet man den Mittelpunkt der Öffnung, innerhalb der Radialebene, und vergleicht diesen mit dem Mittelpunkt der Öffnung der Wanddurchführung derselben Ebene, stellt man fest, dass die Mittelpunkte einen Abstand zueinander aufweisen. Die beiden Mittelpunkte liegen nicht aufeinander. In einer Geometrierechnung wäre der Betrag des Abstandsvektors der Mittelpunkte größer Null.

Erfindungsgemäß umfasst die Leiterkarte die zweiten Mittel, mit denen die horizontale Position (x, z) des elektronischen Bauteils zur Wanddurchführung bestimmbar ist.

Vorteilhafterweise ist das elektronische Bauteil mit Lötananschlusselementen, so genannten Lötpins, ausgestattet. Die Leiterkarte enthält Bohrungen, in welche die Lötanschlusselemente eingesteckt werden und mit den Leiterbahnen der Leiterkarte verbunden werden können. Die Bohrungen stellen die zweiten Mittel dar. Je nach Position der Bohrungen verändert sich auch die horizontale Position (x, z) des elektronischen Bauteils auf der Leiterkarte und damit auch zur Wanddurchführung.

Die Leiterkarte kann leicht ausgetauscht werden, da sie reversibel mit der Wanddurchführung verbunden ist. Verschiedene Leiterkarten mit unterschiedlichen, axial zueinander verschobenen Bohrungen können bevorratet werden.

Erfindungsgemäß weist die Leiterkarte mehrere so genannte Bohrbilder auf, damit das elektronische Bauteil in verschiedenen Positionen darauf angeschlossen werden kann.

In einer besonders bevorzugten Ausführungsform handelt es sich beim elektronischen Bauteil um einen elektro-optischen Wandler. Darin werden die oben bereits erwähnten Ferulensteckverbinder gesteckt, die in der Regel einen Höhen- und Längenausgleich erfordern. Alternativ handelt es sich beim elektronischen Bauteil um einen Steckverbinder. Beide vorgenannten Komponenten weisen steckseitig jeweils eine Buchse auf.

Vorteilhafterweise verfügt die Gerätebuchse über einen Leiterkartenstecker, der auf der Leiterkarte angeschlossen ist. Über die Leiterbahnen der Leiterkarte ist der Leiterkartenstecker mit dem elektronischen Bauteil verbunden. Das vom Leiterkartenstecker wegführende, angeschlossene Kabel kann mit der Elektronik des Gerätes in Verbindung gebracht werden. In der Regel führt das Kabel zu einer Leiterkarte des Gerätes.

Eine besonders bevorzugte Ausführungsform der Erfindung ist wie folgt ausgestaltet:
Gerätebuchse, bestehend aus einer Wanddurchführung, einer Leiterkarte und einem auf der Leiterkarte aufgebrachten elektronischen Bauteil, wobei die Gerätebuchse ein Verriegelungsmittel umfasst, wodurch die Leiterkarte mit der Wanddurchführung verbindbar ist,
wobei die Gerätebuchse zumindest eine Dichtung aufweist, wobei die Dichtung erste Mittel umfasst, durch die die vertikale Position (y, z) des elektronischen Bauteils auf der Leiterkarte vorgegeben ist,
wobei die Dichtung eine Öffnung aufweist, in welche das elektronische Bauteil einführbar ist, wobei in der Öffnungsebene der Dichtung ein Mittelpunkt (Md) liegt und die Öffnung der Wanddurchführung einen Mittelpunkt (Mo) aufweist und wobei die Mittelpunkte (Md, Mo) einen Abstand zueinander aufweisen, dessen Betrag größer Null ist,
wobei die Leiterkarte zweite Mittel umfasst, durch die die horizontale Position (x, z) des elektronischen Bauteils zur Wanddurchführung vorgegeben ist, wobei das elektronische Bauteil Lötananschlusselemente umfasst, und die zweiten Mittel der Leiterkarte als Bohrungen ausgeführt sind, in welche die Lötananschlusselemente des elektronischen Bauteils einführbar sind.

Diese Konstellation ermöglicht insgesamt eine besonders kompakte Bauweise der erfindungsgemäßen Gerätebuchse.

### Ausführungsbeispiel

Ein Ausführungsbeispiel der Erfindung ist in den Zeichnungen dargestellt und wird im Folgenden näher erläutert. Es zeigen:
- Fig. 1: eine Draufsicht auf eine Wanddurchführung
- Fig. 2: eine perspektivische Darstellung der Wanddurchführung,
- Fig. 3: eine perspektivische Darstellung eines elektronischen Bauteils,
- Fig. 4: eine perspektivische Darstellung einer Leiterkarte,
- Fig. 5: eine Draufsicht auf eine Dichtung,
- Fig. 5a: eine Draufsicht auf eine alternative Dichtung,
- Fig. 5b: eine weitere Draufsicht auf eine alternative Dichtung,
- Fig. 6: eine perspektivische, teilweise explodierte Ansicht einer Gerätebuchse und
- Fig. 7: eine Seitenansicht der Gerätebuchse mit einem eingesteckten optischen Steckverbinder.

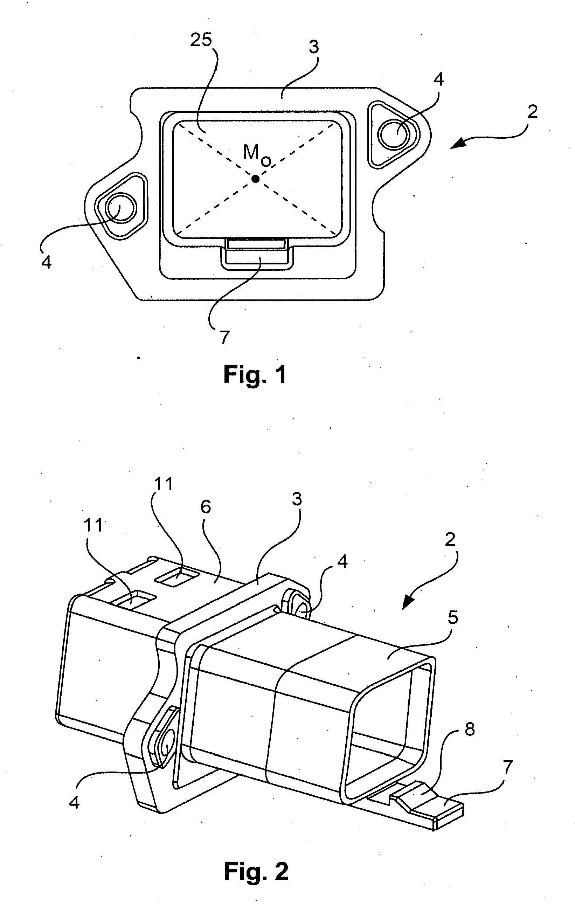

Die Figur 1 zeigt eine Wanddurchführung 2 einer erfindungsgemäßen Gerätebuchse 1. Die Wanddurchführung 2 ist im Wesentlichen als Zylinder mit quadratischer Grundfläche ausgebildet. Etwa mittig weist der Zylinder einen außen umlaufenden Kragen 3 auf, der zwei diagonal zueinander ausgerichtete Bohrungen 4 enthält. Über die Bohrungen 4 kann die Wanddurchführung 2 an eine Gerätewand eines Gerätes (nicht gezeigt) fixiert werden.

Die Wanddurchführung 2 weist eine Öffnung 25 auf. In der Öffnungsebene liegt der Mittelpunkt Mo der Öffnung.

Der in das Gerät hineinragende Teil 5 der Wanddurchführung 2 weist ein Verriegelungsmittel 7 auf. Das Verriegelungsmittel 7 ist als längliche Zunge mit einem Rasthaken 8 ausgebildet. Der Rasthaken 8 greift in eine Ausnehmung 9 der Leiterkarte 10 ein, wodurch Leiterkarte 10 und Wanddurchführung 2 reversibel miteinander verbunden werden.

Der aus dem Gerät herausragende Teil 6 der Wanddurchführung 2 weist beidseitig jeweils zwei Einkerbungen 11 auf, welche zur Fixierung eines in die Gerätebuchse 2 eingeführten Steckverbinders 12 dienen.

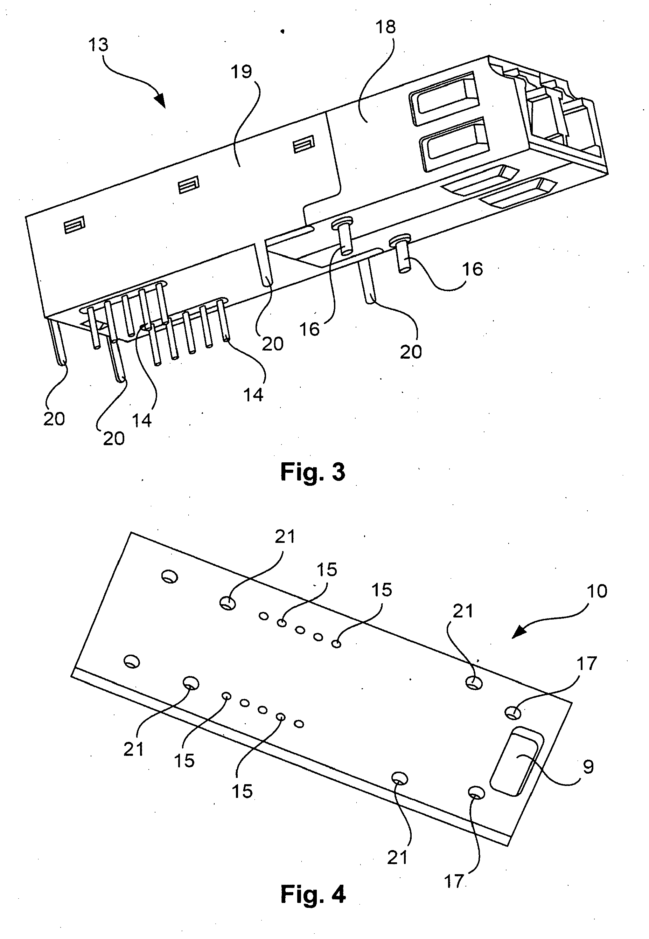

In Figur 3 ist ein elektronisches Bauteil 13 zu sehen, welches hier als elektro-optischer Wandler ausgestaltet ist. Dieser elektro-optische Wandler ist in der Fachwelt auch als SFF-Transceiver bekannt.

Das elektronische Bauteil 13 umfasst Lötanschlusselemente 14, so genannte Lötpins, die in Bohrungen 15 der Leiterkarte 10 eingebracht werden können und angelötet werden, um eine elektrische Kontaktierung mit den Leiterbahnen (nicht gezeigt) der Leiterkarte 10 zu erzeugen.

Im vorderen Bereich weist das elektronische Bauteil 13 weitere Pins 16 auf, die ebenfalls in Bohrungen 17 der Leiterkarte eingebracht und verlötet werden. Die Pins sind leitend mit dem vorderen Gehäuseteil 18 verbunden und gewährleisten in Kombination mit dem Gehäuseteil 18 eine Abschirmung gegen elektromagnetische Strahlung.

Vom hinteren Gehäuseteil 19 des Bauteils 13 stehen ebenfalls Pins 20 ab, die ebenfalls in Bohrungen 21 der Leiterkarte eingeführt und verlötet werden. Über das hintere Gehäuseteil 19 wird eine elektromagnetische Abschirmung für die vom Gehäuseteil 19 abgedeckten Bauteile (nicht Die Bohrungen 15, 17, 21 können als so genanntes Bohrbild auf der Leiterkarte zusammengefasst werden. Das Bohrbild bildet die erfindungsgemäßen zweiten Mittel zur horizontalen Positionierung (x, z) des elektronischen Bauteils 13 auf der Leiterkarte 10.

Idealerweise weist die Leiterkarte 10 mindestens zwei verschiedene Bohrbilder auf, die zueinander in axialer Richtung (x) - und vorzugsweise auch in dazu senkrechter Richtung (z) - verschoben. Dadurch kann das elektronische Bauteil 13 je nach Bedarf weiter vorne oder hinten und/oder seitlich positioniert werden.

Die zweiten Mittel könnten auch anders ausgeführt werden. Beispielweise kann das elektronische Bauteil über einzelne, flexible Leiter auf der Leiterkarte fixiert werden. Das Bauteil 13 könnte dann nicht erfindungsgemäß über einen Schlitten in axialer Richtung (x) bewegbar sein.

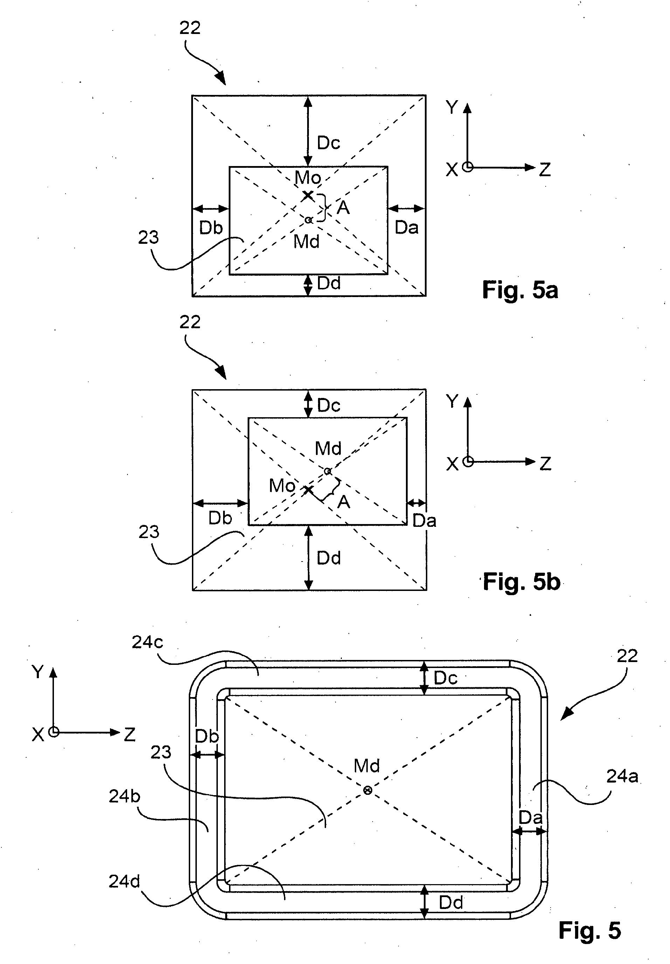

Die Figur 5 zeigt die Dichtung 22 der Gerätebuchse 1. Es können noch weitere Dichtungen vorhanden sein, die beispielsweise über den Kragen 3 die Wanddurchführung 2 abdichten. Die Dichtung 22 weist eine Öffnung 23 auf, die einen Mittelpunkt Md hat.

Die Position der Öffnung 23 kann je nach Dichtung unterschiedlich sein. Die Öffnung kann in horizontaler und dazu Senkrechter Richtung - also in der yz-Ebene - verschoben sein. Je nach Position der Öffnung verändert sich auch die vertikale (y) Position und/oder die horizontale (z) Position des elektronischen Bauteils zur Wanddurchführung 2. Dichtungen mit unterschiedlicher Öffnungsposition können leicht bevorratet werden.

Betrachtet man die Mittelpunkte Mo der Wanddurchführung und Md der Dichtung in einer Ebene, stellt man fest, dass die Mittelpunkte Mo und Md nicht aufeinander liegen, wenn die Öffnung 23 der Dichtung 22 nicht mittig liegt. Die Mittelpunkte Mo und Md weisen in diesem Fall einen Abstand A zueinander auf. Die Figuren 5a und 5b zeigen unterschiedliche Positionen der Öffnung 23 der Dichtung 22.

Um die Mittelpunkte Mo und Md miteinander vergleichen zu können, kann man sich diese in dieselbe Ebene projiziert vorstellen. Der Abstandsvektor ist damit zweidimensional. Dies wird erfindungsgemäß mit "Abstand der Mittelpunkte" verstanden.

Die unterschiedliche Position der Öffnung 23 der Dichtung stellt das erste Mittel zur vertikalen Positionierung des elektronischen Bauteils 13 zur Wanddurchführung 2 dar.

Die Öffnung wird von einem Kragen 24 umrandet, der aus einzelnen Kragenelementen 24a, 24b, 24c, 24d besteht. Die Kragenelemente 24a-d haben jeweils eine Breite Da, Db, Dc, Dd. Die unterschiedliche Lage der Öffnung 22 der Dichtung 22 führt dazu, dass sich bei unterschiedlichen Dichtungen die Breite der Wandsegmente 24a-d unterscheidet.

In der Regel müssen nur kleine Abweichungen bei unterschiedlichen Steckverbindern korrigiert werden, so dass der Abstand A und die daraus resultierenden unterschiedlichen Breiten Da-d der Wandsegmente klein sind.

Die Figuren 5a und 5b zeigen eine schematische Draufsicht auf eine erfindungsgemäße Dichtung. Bei der Figur 5a ist die Breite Dc größer als die Breite Dd. Hier verlagert die Dichtung die Position des elektronischen Bauteils vertikal nach unten. Bei der Figur 5b ist die Breite Dc kleiner als die Breite Dd. Außerdem ist die Breite Da kleiner als Db. Dadurch wird das elektronische Bauteil in vertikaler (y) und horizontaler Richtung (z), nach rechts oben, verschoben.

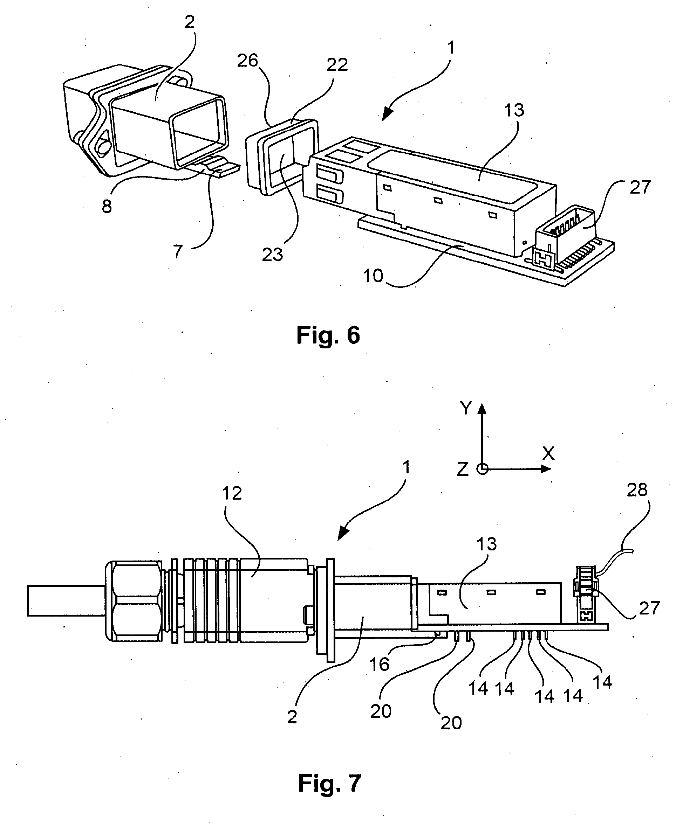

Aus Figur 6 ist die dreidimensionale Form der oben erwähnten Dichtung zu entnehmen. Ein axial abstehender, umlaufender Steg 26 ist in die Öffnung des Wandsegments 2 einführbar. Das elektronische Bauteil 13 wird durch die Öffnung 23 hindurchgesteckt. Der Kragen 24 der Dichtung liegt am elektronischen Bauteil 13 an.

In den Figuren 6 und 7 ist ein Leiterkartenstecker 27 gezeigt, der auf der Leiterkarte 10 mit Lötanschlüssen angeschlossen ist. Über die Leiterbahnen der Leiterkarte 10 ist der Leiterkartenstecker 27 mit dem elektronischen Bauteil 13 verbunden. Das vom Leiterkartenstecker 27 wegführende, angeschlossene Kabel 28 kann mit der Elektronik eines Gerätes (nicht gezeigt) in Verbindung gebracht werden. In der Regel führt das Kabel zu einer Leiterkarte des Gerätes und wird hier ebenfalls mit einem Leiterkartenstecker angeschlossen.

Durch den Leiterkartenstecker 27 ist es möglich direkt eine andere Leiterkarte mit bereits aufgebrachten elektronischem Bauteil auszutauschen. Der Stecker wird von einer Variante abgezogen und mit einer neuen Variante verbunden, die dann nur noch in die Wanddurchführung eingeschoben und mit dieser verbunden werden muss. Eine so genannte Buchsenumrüstung am Gerät ist einfach und schnell realisierbar.

**Bezugszeichenliste**

| | | | |
|---|---|---|---|
| 1 | Gerätebuchse | 11. | Einkerbung |
| 2 | Wanddurchführung | 12. | Steckverbinder |
| 3 | Kragen | 13. | Elektronisches Bauteil |
| 4 | Bohrung | 14. | Lötanschlusselement |
| 5 | Hineinragender Teil | 15. | Bohrung |
| 6 | Hrausragender Teil | 16. | Pin |
| 7 | Verriegelungsmittel | 17. | Bohrung |
| 8 | Rasthaken | 18. | Vorderes Gehäuseteil |
| 9 | Ausnehmung | 19. | Hinteres Gehäuseteil |
| 10 | Leiterkarte | 20. | Pin |
| Md | Mittelpunkt der Dichtung | 21. | Bohrung |
| Mo | Mittelpunkt der Wanddurchführung | 22. | Dichtung |
| A | Abstand der Mittelpunkt Mo, Md | 23. | Öffnung |
| Da-d | Breite des Kragens | 24. | a, b, c, d Kragen |
| | | 25. | Öffnung |
| | | 26. | Steg |
| | | 27. | Leiterkartenstecker |

## Patentansprüche

1. Gerätebuchse (1), bestehend aus einer Wanddurchführung (2), einer Leiterkarte (10) und einem auf der Leiterkarte (10) aufgebrachten elektronischen Bauteil (13)
und Mitteln, mit denen die vertikale (y) und/oder horizontale (x, z) Position des elektronischen Bauteils (13) zur Wanddurchführung (2) einstellbar ist,
• wobei die Gerätebuchse (1) ein Verriegelungsmittel (7, 8) umfasst, wodurch die Leiterkarte (10) mit der Wanddurchführung (2) verbindbar ist,
• wobei die Gerätebuchse (1) erste Mittel (22, 23, 24) umfasst, durch die die vertikale Position (y) des elektronischen Bauteils (13) auf der Leiterkarte (10) einstellbar ist und
• die Gerätebuchse (1) zweite Mittel umfasst, durch die die horizontale Position (x, z) des elektronischen Bauteils (13) zur Wanddurchführung (2) einstellbar ist.
• wobei die Gerätebuchse (1) zumindest eine Dichtung (22) aufweist, wobei die Dichtung (22) die ersten Mittel (23, 24) umfasst
**dadurch gekennzeichnet,**
• **dass** die Leiterkarte (10) die zweiten Mittel umfasst,
• **dass** das elektronische Bauteil (13) Lötanschlusselemente (14, 16, 20) umfasst, und die zweiten Mittel der Leiterkarte (10) als Bohrungen (15, 17, 21) ausgeführt sind und ein Bohrbild auf der Leiterkarte ausbilden, wobei in die Bohrungen (15, 17, 21) die Lötanschlusselemente (14, 16, 20) des elektronischen Bauteils (13) einführbar sind
• **dass** die Leiterkarte (10) mindestens zwei verschiedene Bohrbilder aufweist, die zueinander in axialer Richtung (x) verschoben sind.

2. Gerätebuchse nach Anspruch 1
**dadurch gekennzeichnet, dass**
die Verbindung zwischen der Leiterkarte (10) und der Wanddurchführung (2) reversibel ist.

3. Gerätebuchse nach einem der vorstehenden Ansprüche
**dadurch gekennzeichnet, dass**
die Dichtung (22) eine Öffnung (23) umfasst, in welche das elektronische Bauteil (13) einführbar ist, wobei in der Öffnungsebene der Dichtung (22) ein Mittelpunkt (Md) liegt und eine Öffnung (25) der Wanddurchführung (2) einen Mittelpunkt (Mo) aufweist und wobei die Mittelpunkte (Md, Mo) einen Abstand (A) zueinander aufweisen, dessen Betrag größer Null ist.

4. Gerätebuchse nach einem der Ansprüche 1 bis 3
**dadurch gekennzeichnet, dass**
die Verriegelungsmittel (7, 8) an der Wanddurchführung (2) angeformt sind.

5. Gerätebuchse nach einem der vorstehenden Ansprüche
**dadurch gekennzeichnet, dass**
es sich beim elektronischen Bauteil (13) um einen elektro-optischen Wandler oder um einen Steckverbinder handelt, die steckseitig eine Buchsenöffnung aufweisen.

6. Gerätebuchse nach einem der vorstehenden Ansprüche
**dadurch gekennzeichnet, dass**
die Gerätebuchse (1) einen Leiterkartenstecker (27) aufweist, der einerseits auf der Leiterkarte (10) angeschlossen ist und andererseits über ein angeschlossenes Kabel (28) in elektrischer Verbindung mit der Elektronik eines Gerätes bringbar ist.

## Claims

1. Device socket (1) comprising a wall bushing (2), a printed circuit board (10) and an electronic component (13) which is mounted on the printed circuit board (10), and means with which the vertical (y) and/or horizontal (x, z) position of the electronic component (13) in relation to the wall bushing (2) can be adjusted,
• wherein the device socket (1) comprises a locking means (7, 8), as a result of which the printed circuit board (10) can be connected to the wall bushing (2),
• wherein the device socket (1) comprises first means (22, 23, 24) by way of which the vertical position (y) of the electronic component (13) on the printed circuit board (10) can be adjusted and
• the device socket (1) comprises second means by way of which the horizontal position (x, z) of the electronic component (13) in relation to the wall bushing (2) can be adjusted,
• wherein the device socket (1) has at least one seal (22), wherein the seal (22) comprises the first means (23, 24),
**characterized**
• **in that** the printed circuit board (10) comprises the second means,
• **in that** the electronic component (13) comprises solder connection elements (14, 16, 20), and the second means of the printed circuit board (10) are embodied as bores (15, 17, 21) and form a bore pattern on the printed circuit board, wherein the solder connection elements (14, 16, 20) of the electronic component (13) can be inserted into the bores (15, 17, 21),
• **in that** the printed circuit board (10) has at least two different bore patterns which are shifted in relation to one another in the axial direction (x).

2. Device socket according to Claim 1,
**characterized in that**
the connection between the printed circuit board (10) and the wall bushing (2) is reversible.

3. Device socket according to either of the preceding claims,
**characterized in that**
the seal (22) comprises an opening (23) into which the electronic component (13) can be inserted, wherein a central point (Md) is situated in the opening plane of the seal (22) and an opening (25) of the wall bushing (2) has a central point (Mo), and wherein the central points (Md, Mo) are at a distance (A) from one another which has a value greater than zero.

4. Device socket according to one of Claims 1 to 3,
**characterized in that**
the locking means (7, 8) are integrally formed on the wall bushing (2).

5. Device socket according to one of the preceding claims,
**characterized in that**
the electronic component (13) is an electro-optical converter or a plug-in connector which have a socket opening on the plug-in side.

6. Device socket according to one of the preceding claims,
**characterized in that**
the device socket (1) has a printed circuit board plug (27) which is connected on the printed circuit board (10) at one end and can be electrically connected to the electronics system of a device by means of a connected cable (28) at the other end.

## Revendications

1. Prise femelle (1) pour équipement, constituée d'une traversée murale (2), d'une carte de circuit imprimé (10) et d'un composant électronique (13) monté sur la carte de circuit imprimé (10)
et des moyens permettant de régler la position verticale (y) et/ou horizontale (x, z) du composant électronique (13) par rapport à la traversée murale (2),
• dans laquelle la prise femelle (1) pour équipement comprend un moyen de verrouillage (7, 8) qui permet de relier la carte de circuit imprimé (10) à la traversée murale (2),
• dans laquelle la prise femelle (1) pour équipement comprend des premiers moyens (22, 23, 24) permettant de régler la position verticale (y) du composant électronique (13) sur la carte de circuit imprimé (10), et
• la prise femelle (1) pour équipement comprend des seconds moyens permettant de régler la position horizontale (x, z) du composant électronique (13) par rapport à la traversée murale (2),
• dans laquelle la prise femelle (1) pour équipement comprend au moins un joint d'étanchéité (22), dans laquelle le joint d'étanchéité (22) comprend les premiers moyens (23, 24)
**caractérisée en ce que**
• la carte de circuit imprimé (10) comprend les seconds moyens,
• le composant électronique (13) comprend des éléments de connexion soudés (14, 16, 20), et les seconds moyens de la carte de circuit imprimé (10) sont réalisés sous la forme d'alésages (15, 17, 21) et forment une configuration de perçage sur la carte de circuit imprimé, dans laquelle les éléments de connexion soudés (14, 16, 20) du composant électronique (13) peuvent être insérés dans les alésages (15, 17, 21),
• la carte de circuit imprimé (10) présente au moins deux configurations de perçage différentes qui sont décalées l'une par rapport à l'autre dans la direction axiale (x).

2. Prise femelle pour équipement selon la revendication 1, **caractérisée en ce que** la liaison entre la carte de circuit imprimé (10) et la traversée murale (2) est réversible.

3. Prise femelle pour équipement selon l'une des revendications précédentes, **caractérisée en ce que** le joint d'étanchéité (22) comprend une ouverture (23) dans laquelle le composant électronique (13) peut être inséré, dans laquelle un centre (Md) se situe dans le plan de l'ouverture du joint d'étanchéité (22) et une ouverture (25) de la traversée murale (2) possède un centre (Mo) et dans laquelle les centres (Md, Mo) sont séparés d'une distance (A) dont la valeur est supérieure à zéro.

4. Prise femelle pour équipement selon l'une des revendications 1 à 3, **caractérisée en ce que** les moyens de verrouillage (7, 8) sont formés d'un seul tenant sur la traversée murale (2).

5. Prise femelle pour équipement selon l'une des revendications ci-dessus, **caractérisée en ce que** le composant électronique (13) est un transducteur électro-optique ou un connecteur à fiche qui présente une ouverture de prise du côté de la fiche.

6. Prise femelle pour équipement selon l'une des revendications précédentes, **caractérisée en ce que** la prise femelle (1) pour équipement comporte une fiche (27) pour carte de circuit imprimé qui est raccordée d'une part à la carte de circuit imprimé (10) et d'autre part peut être reliée électriquement à l'électronique d'un équipement par l'intermédiaire d'un câble raccordé (28).
